# EUROPEAN PATENT SPECIFICATION

(11) **EP 0 406 263 B1**
(45) Date of publication and mention of the grant of the patent: **08.06.1994**
(21) Application number: 89903285.8
(22) Date of filing: 27.02.1989
(51) Int. Cl.: B01D 53/34

(54) **METHOD FOR CLEANING GASES**
VERFAHREN ZUR REINIGUNG VON GASEN
PROCEDE D'EPURATION DE GAZ

(30) Priority: 03.03.1988 SE 8800756
(43) Date of publication of application: 09.01.1991
(73) Proprietor: ABB FLÄKT AB, S-131 34 Nacka (SE)
(72) Inventor: BJERLE, Ingemar, S-237 00 Bjärred (SE); KARLSSON, Hans, S-222 54 Lund (SE); PETERSEN, Tom, S-852 59 Sundsvall (SE); PETERSON, Joseph, Austin, TX 78704 (US)
(74) Representative: Jenkler, Malte
(86) International application number: SE8900083
(87) International publication number: WO8907974

(56) References cited:
- SE-B- 450 627
- US-A- 4 178 349
- US-A- 4 590 049

## Description

The present invention relates to a method for cleaning gases which contain acidifying components, preferably flue gases formed during the combustion of coal. According to present-day techniques, a sorbent in the form of a fine-grained dry powder is blown into the combustion chamber or flue gas duct, or a sorbent in the form of a dry powder or fine droplets is injected into a special reactor in the flue gas system.

The emission of acidifying gases, such as sulphur dioxide, from e.g. coal-fired power plants has become a major environmental problem. Several different methods have been tried in order to reduce emissions of this type.

To this end, it has been suggested both to purify the fuel and to take measures during the combustion and/or to clean the flue gases produced. Certain pollutants, such as nitrogen oxides, can be dissolved in harmless substances. The formation of pollutants can also be counteracted or obviated by optimising the combustion process. Other substances, such as sulphur, can however be taken care of only as a residual product and must not be emitted in any form in an uncontrolled manner. In order to remove e.g. sulphur, an absorbent is generally added, containing substances which together with sulphur form stable compounds, either in the combustion chamber or in a specially designed flue gas cleaning system.

In the combustion chamber, limestone or dolomite is generally added as a finely milled or somewhat coarser powder. In the flue gas system, finely milled limestone or slaked lime in water suspension is most often added. Techniques have also been suggested in which a dry sorbent is supplied to the flue gases. The reactivity of most sorbents obtainable at resonable costs is however low at low temperatures and low relative humidity, which makes these techniques insufficiently effective.

Examples of known methods are given in SE 8005571-8 describing the injection of sorbent into the combustion chamber, DE-A-36 07 357 describing wet flue gas cleaning, SE-A-7904382 describing wet-dry flue gas cleaning, EP-A-0,177,896 describing completely dry flue gas cleaning, and SE-A-8505269 describing a combined solution.

When supplying sorbent in the combustion chamber, the major drawback then is that the degree of utilisation of the sorbent is very low. The wet flue gas scrubbers are far more efficient in this respect, but involve high investment costs and maintenance problems. Wet-dry flue gas cleaning involves lower capital costs but necessitates a more refined sorbent which often is much more expensive. The completely dry methods entail the lowest investment costs for the flue gas systems, but most often require a highly refined and, thus, expensive sorbent and do not permit high-grade cleaning. Nor does separate moistening of the flue gases, as suggested e.g. in SE 7908674-0, make the cleaning sufficiently effective according to current environmental standards.

A decisive factor for the absorption reactions is the surface of the particles. The larger the specific area is, the more rapidly and efficiently is the sulphur bonded to the sorbent. Another important factor is the tendency to hold moisture. For example, additions of hygroscopic material have been suggested in SE-A-8006604 for maintaining a substantially dry sorbent slightly moist on the surface.

In order to provide a large specific area, the sorbent is often milled into a fine powder or otherwise treated to achieve the same result. Slaking of burnt lime, for instance, gives a large specific area. To prevent aggregation and to expose new surfaces, it has also been suggested to mill the dust which is recycled for a more efficient utilisation of the sorbent. Examples hereof are given in EP-A-0,177,896 and US-A-4,590,046.

Fly ash from coal-fired boilers usually contains calcium. A small amount of the sulphur oxides present in the flue gas can therefore be bound to the fly ash. However, the ash usually is in the form of spheres having an almost vitreous surface, which hampers sulphur bonding. Only a fraction of the theoretical possibility can be utilised. Moreover, the low-temperature reactions in the sulphur bonding occurs the most rapidly with slaked lime as absorbent. The fly ash principally contains CaO, and because of the hard surface of the ash, it is very difficult to convert it into Ca(OH)₂ by slaking in water. Using fly ash in this way has been suggested in SE-A-7904382 where the fly ash is mixed with slaked lime and water to form a slurry which is supplied to a desulphurisation reactor operating according to the wet-dry method. The fly ash however affects the separation but marginally.

In order to be able to use alkaline fly ash far more efficiently when desulphurising flue gases, it is suggested according to the present invention that the fly ash is milled and thereafter maintained in water suspension at an elevated temperature such that the major part of the CaO present in the fly ash is converted into Ca(OH)₂.

Fly ash generally also contains silicon. When calcium compounds and silicon are in aqueous solution, so-called pozzolanic reactions often occur. This means that amorphous or crystalline ongrowths occur on the surface of the particles in a suspension. As long as these reactions take place, surface enlargement can take place. If the fly ash contains a large proportion of silicon, the specific area can be considerably increased. If the calcium content is insufficient, the reactions can be maintained by adding e.g. slaked lime to the suspension. According to the present invention, it is therefore suggested in particular that the water suspension of milled fly ash is also supplied with slaked lime before or during the heat treatment if the inherent alkalinity of the ash is not sufficient. The most favourable weight ratio of SiO₂ to CaO seems to be about 2. Similarly, if the silicon content is low, SiO₂ can be added.

If the inherent alkalinity of the fly ash is high, the area increase takes place considerably faster than if extra Ca(OH)₂ need be added. If the fly ash is not milled, the area increase takes place very slowly, and counterreactions sometimes lead to an area reduction long before a theoretical maximum has been attained. Also with milled ash, there is obtained an optimum heat treatment time with maximal particle area and thereafter a slow decrease.

According to the invention, it has been found especially advantageous to use wet milling. When the fly ash is supplied in water suspension to a mill, for instance a ball mill, the desired reactions for the formation of slaked lime and calcium silicates are immediately initiated. The reaction velocity becomes lower if the surfaces exposed during milling first come into contact with air. With highly alkaline fly ash, the major part of the surface enlargement is obtained during the wet milling process. The exothermal slaking reaction gives a substantial temperature rise which also accelerates the formation of calcium silicates.

In addition to the effect of surface enlargement favourable in itself, the pozzolanic reaction products make the particles far more apt to hold moisture. The sulphur bonding reactions are highly dependent on the presence of moisture on the surface of the particles in the sorbent. In the wet-dry methods, sulphur bonding therefore takes place substantially while the sorbent is in water suspension. In completely dry methods, the relative humidity is an important parameter. A sorbent being highly apt to bind moisture to its surface is advantageous in both methods. In completely dry methods, it confers an entirely decisive advantage. In the wet-dry methods, it gives a considerably improved separation of sulphur in the equipment where the dried sorbent is separated.

When fly ash and slaked lime are held in suspension for activating the fly ash as described above, the temperature should be essentially above room temperature. Optimal utilisation of the alkalinity of the fly ash seems to require a temperature of at least 65°C. At higher temperatures, the same result is obtained in a shorter time. At lower temperatures, the reactions stop before all Ca has been converted into Ca(OH)₂. For practical reasons, the temperature is suitably maintained slightly below 100°C, for instance from 85°C to 95°C.

The invention will be described in more detail hereinbelow with reference to the accompanying drawings.
Fig. 1 schematically shows a plant for carrying out the method according to the invention, and
Figs. 2-8 are graphs showing how the method according to the invention improves the capacity of fly ash present in the flue gases to absorb sulphur dioxide also present in the flue gases.

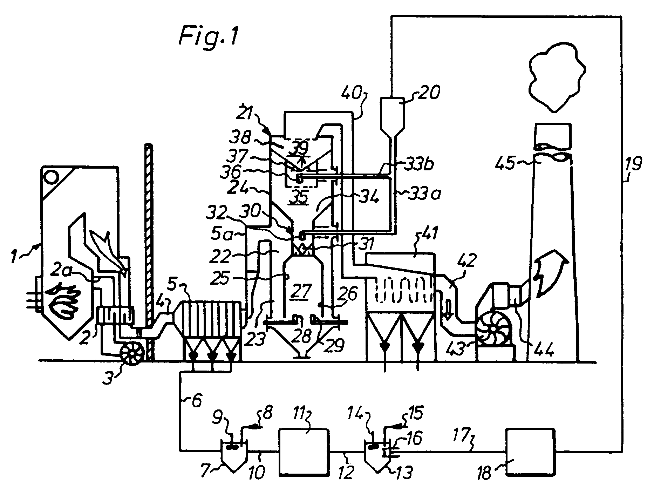

Fig. 1 shows a central boiler plant to be fired with pulverised coal. The flue gases formed during the combustion of the pulverised coal are conducted to a preheater 2 adapted to transfer heat from the hot flue gases to combustion air. The combustion air is supplied to the central boiler plant through a duct 2a by means of a fan 3.

The hot flue gases are led through a duct 4 to an electrostatic precipitator 5 in which the particulate pollutants of the flue gases, so-called fly ash, are separated. The separated fly ash is conducted by means of compressed air through a conduit 6 to a vessel 7 in which the fly ash, by means of an agitator 9, is mixed with water supplied through a conduit 8. In this manner, the fly ash is suspended in the water and the resulting water suspension is led through a conduit 10 to a mill 11. In this mill, preferably being of the ball mill type equipped with agitators, the fly ash is thus milled in the wet state, whereupon it is led through a conduit 12 to a vessel 13.

In the vessel 13, the fly ash now milled is mixed by means of an agitator 14 with burnt or slaked lime supplied to the vessel 13 through a conduit 15.

The amount of lime supplied to the vessel 13 depends on the content of calcium oxide (CaO) in the fly ash. If the fly ash has a high content of calcium oxide, ≧ 20% by weight, in the Example 28% by weight, it will be referred to as HCFA hereinafter, and if it has a low content of calcium oxide, ≦ 10% by weight, in the Example about 4% by weight, it will be referred to as LCFA hereinafter.

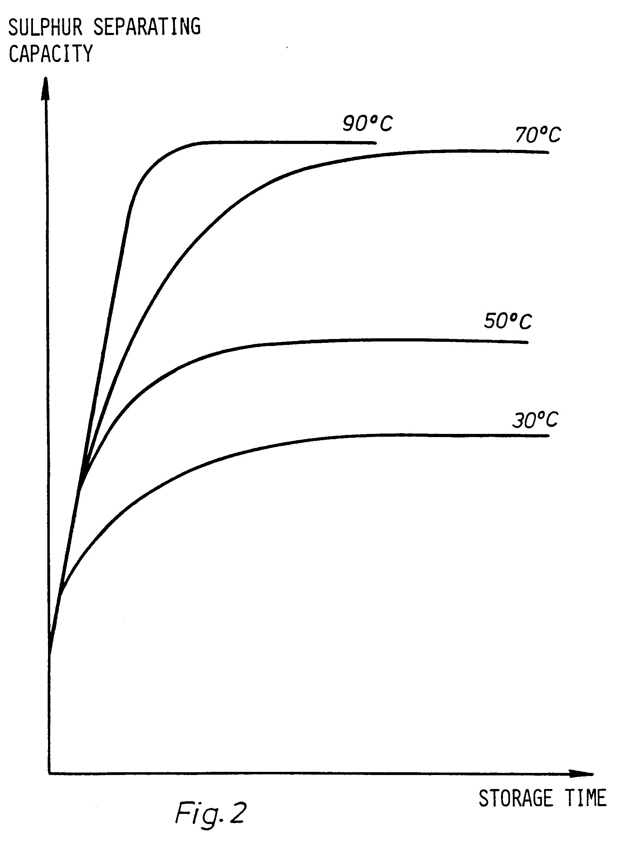

In the vessel 13, part of the calcium oxide will be converted into calcium hydroxide. The size of this part is determined, as appears from Fig. 2 showing the principle relations, by the time and the temperature at which the mixture of the above-mentioned water suspension and the lime is stored in the container. The temperature of the mixture is maintained by means of a thermocouple 16 between 65°C and 95°C, preferably 85°C.

The fly ash in the vessel 13 also contains silicon dioxide and in the HCFA-type fly ash here concerned, the silicon dioxide content is about 20% by weight, and in the LCFA-type fly ash, the silicon dioxide content is about 55% by weight. This silicon dioxide reacts with calcium hydroxide present in the vessel 13 and forms calcium silicates on the surface of the fly ash particles. These calcium silicates have a large surface area, giving the fly ash particles covered thereby a large surface area.

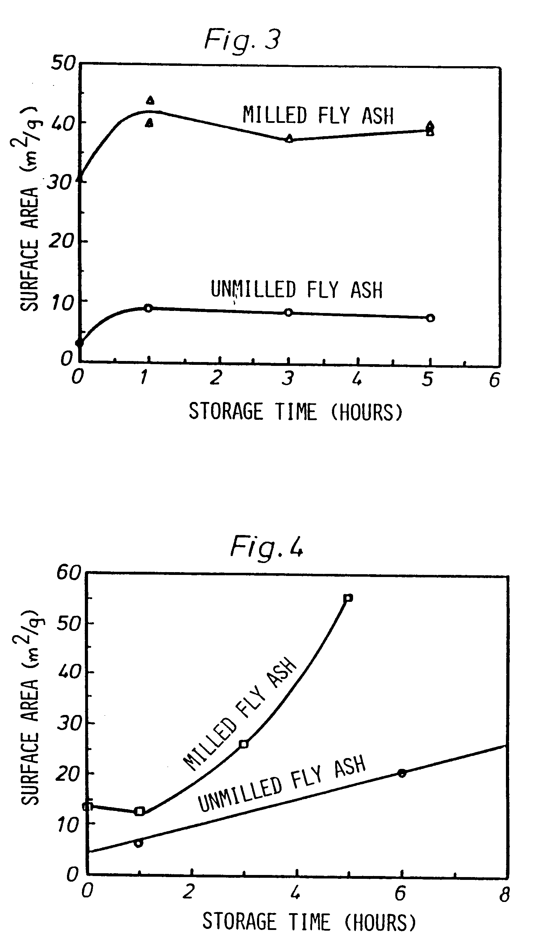

Figs. 3 and 4 show how the surface area of the fly ash particles varies with the time of storage in the vessel 13, Fig. 3 showing results when using HCFA-type fly ash, and Fig. 4 showing results when using LCFA-type fly ash. Both Fig. 3 and Fig. 4 have an upper and a lower curve, the lower curves, which show how the surface area of unmilled fly ash particles varies with the storage time, being included in the Figures to illustrate the favourable effect of the above-mentioned milling. The reason why milled fly ash particles will have a larger surface area than unmilled fly ash particles is, inter alia, that the dissolution of silicon compounds from fly ash increases with a decrease of the particle size of the fly ash, since the surface area available for dissolution of silicon compounds then increases.

From the top curve of Fig. 3 further appears that the surface area of the fly ash particles attained its maximum value after a storage time of about 1 hour. This is so because the above-mentioned reaction between silicon compounds and calcium hydroxide commences as early as the mill 11 when using HCFA-type fly ash, and also because this fly ash has a low content of silicon dioxide. The reason why this reaction starts as early as the mill is that the calcium oxide present in the fly ash is slaked during the milling operation, the heat which is then released heating the water suspension to such a high temperature that the above-mentioned reaction can take place.

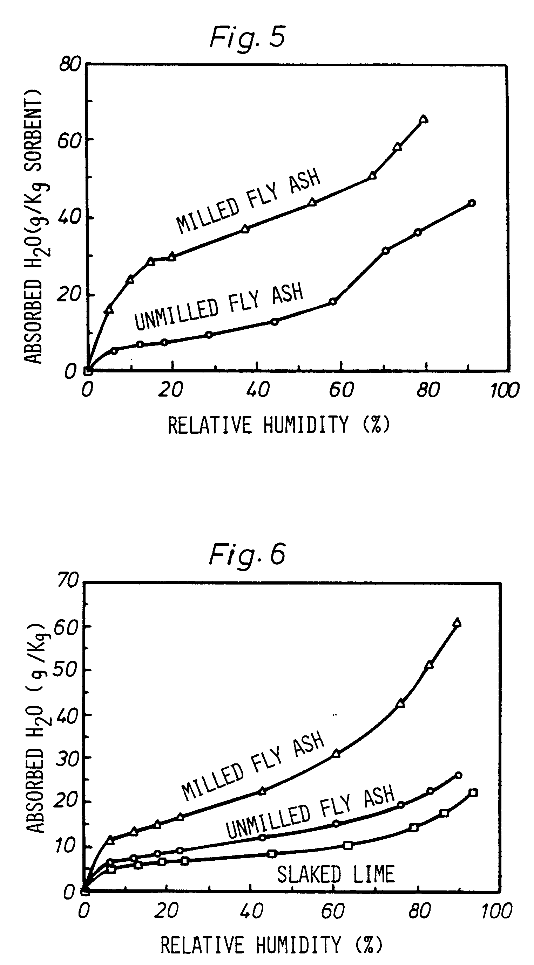

As appears from Figs. 5 and 6, the above-mentioned formation of calcium silicates on the surface of the fly ash particles also affects the water absorbency of the fly ash particles.

Fig. 5 shows the results when using HCFA-type fly ash which has been stored in the vessel 13 at 85°C for 1 hour, while Fig. 6 shows the results when using LCFA-type fly ash which has been stored in the vessel 13 at 85°C for 5 hours. Like Figs. 3 and 4, these Figures also include lower curves showing how the amount of absorbed water varies with the relative humidity for unmilled fly ash particles. Fig. 6 additionally has a curve showing the water absorbency of pure calcium hydroxide. This curve is closest to the x-axis in Fig. 6, which means that both milled and unmilled fly ash particles have a higher water absorbency than calcium hydroxide.

After a predetermined storage time, which varies between 1 and 24 hours, the mixture is conducted from the vessel 13 through a conduit 17 to a drying unit 18 of conventional type, e.g. a spray drier or microwave drier. In this drying unit, the mixture is dried in such a manner that the fly ash particles suspended therein do not agglomerate but leave the drying unit in the form of a dry powder. This powder is then conducted by means of compressed air through a conduit 19 to a container 20.

After the fly ash has been removed from the flue gases in the electrostatic precipitator 5, the flue gases are led through a duct 5a to a contact reactor 21 in which the gaseous pollutants, such as sulphur dioxide, present in the flue gases are converted into particles by an absorption process. The flue gases are introduced into a cylindrical chamber 22 which is provided at the central portion of the contact reactor and is narrower at the bottom, forming a cylindrical gap 23.

The gap 23 is defined by the outer casing 24 of the contact reactor 21 and inner wall portions 25, 26 defining between them an internal generally cylindrical space 27 at the lower portion of which nozzles 28, 29 are so provided as to project into the space 27. The upper portion of the space 27 is tapering and opens into a tubular element 30 centrally disposed in the chamber 22 and having a large cross-sectional area in relation to the gap 23. The tubular element 30 is provided with a first turbulence-generating means 31 and, downstream thereof, with a first means 32 for supplying powder formed as described above, from the container 20 and through the conduit 33a to the interior of the element 30.

As appears from Fig. 1, the tubular element 30 opens into a diverging part 34 extending between the element 30 and the outer casing 24 of the contact reactor 21. Downstream of the diverging part 34, there is a first reaction part 35 which is defined by the outer casing 24 of the contact reactor, thus having a maximal cross-sectional area. The reaction part 35 is provided with a second means 36 for supplying the above-mentioned powder from the container 20 and through the conduit 33b to the interior, upper portion of the reaction part 35. Downstream of the second means 36, there are further provided a second turbulence-generating means 37, a mixing part 38 and a second reaction part 39.

The first and the second turbulence-generating means 31 and 37, respectively, preferably are of the type shown and described in EP-A-0 185 632.

The flue gases thus flow through the duct 5a into the chamber 22 from where, after a certain compression, they are conducted through the gap 23, passing along the outer surfaces of the wall portions 25, 26 to which they emit some of their thermal energy. In this manner, the wall portions are heated while the flue gases are cooled.

When the flue gases reach the lower portion of the gap 23, they are forced to turn through 180° so as to enter into the space 27 (see Fig. 1) into which the nozzles 28, 29 spray an upwardly directed mist of finely divided water. This water will be evaporated when contacting the hot flue gases which thus are cooled. The flue gases in the space 27, thus serving as evaporation zone, will then have a temperature which is slightly above the dew point temperature.

Since, as pointed out above, the outer surfaces of the wall portions 25 and 26 are heated by the flue gases, the interior temperature of these wall portions will exceed the dew point temperature of the flue gases present in the space 27, whereby deposition of sulphuric acid on the inner surfaces of the wall portions 25 and 26 is prevented.

After the flue gases have passed through the space 27, they are led into the tubular element 30 where eddies are produced in the flue gases by the turbulence-generating means 31 while the above-mentioned dry powder is supplied by the first means 32. Thus, efficient mixing of the flue gases and the powder is obtained in the succeeding diverging part 34. This facilitates the reaction in the reaction part 35 between the powder and the acidifying gases of the flue gases, especially sulphur dioxide, which by an absorption process bind chemically to the fly ash particles. This means that the acidifying gases of the flue gases are bound to particles which can be separated from the flue gases in a succeeding bag filter 41.

The flue gases are thereafter conducted further up through the contact reactor 21, the second means 36, the second turbulence-generating means 37, the mixing part 38 and the second reaction part 39 bringing about a repetition of the above-described reaction between the fly ash particles of the powder supplied and the acidifying gases of the flue gases. In this manner, improved separation of the acidifying gases is achieved.

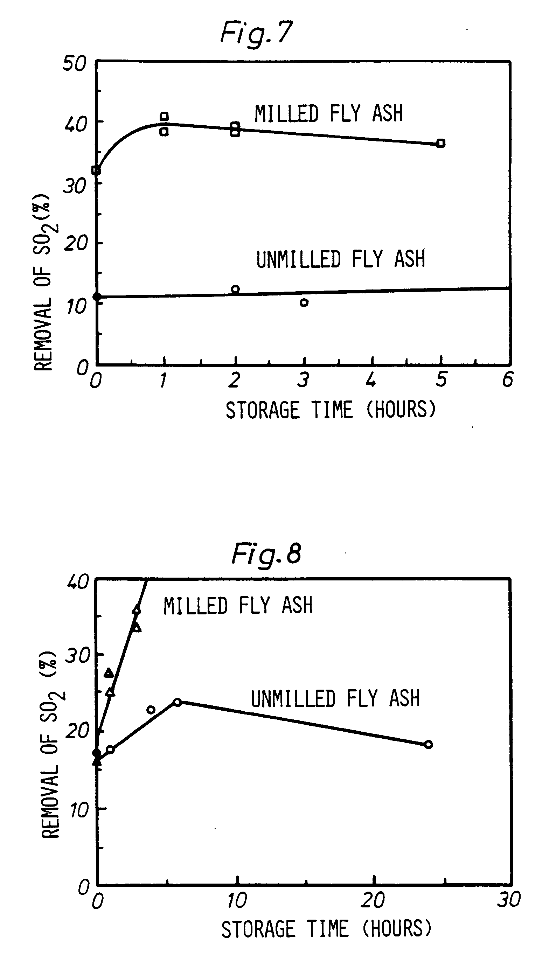

From Figs. 7 and 8 appear that the amount of sulphur dioxide removed from the flue gases depends on the type of fly ash used. Fig. 7 shows the results when using HCFA-type fly ash, while Fig. 8 shows the results when using LCFA-type fly ash. The upper curves in the two Figures show the results when using wet-milled fly ash particles, while the lower curves show the results when using unmilled fly ash particles, depending on the time of storage of the fly ash particles in the vessel 13.

As appears from these Figures, improved separation of sulphur dioxide is achieved when using milled fly ash particles than when using unmilled particles.

The flue gases now partially cleaned of gaseous pollutants are passed through a duct 40 to the bag filter 41 where the reaction products formed by the above-mentioned absorption process are separated from the flue gases together with unreacted sorbent, i.e. the fly ash particles treated as described above.

Part of the sulphur dioxide which is not absorbed by the fly ash particles in the contact reactor reacts therewith in the filter cake which builds up on the outside of the bag filter. As milled fly ash particles have a higher water absorbency than slaked lime (Fig. 6), the separation of sulphur dioxide in the bag filter will be higher when using milled fly ash particles than when using slaked lime.

From the bag filter the flue gases pass through a duct 42 to a flue gas fan 43 which via a duct 44 discharge the cleaned flue gases to a chimney 45 for emission into the atmosphere.

The invention is of course not restricted to the embodiment described above and illustrated in the drawings, but may be modified in several different ways within the scope of the accompanying claims.

For instance, the contact reactor 21, which operates according to the so-called completely dry method, can be replaced by a contact reactor operating according to the so-called wet-dry method, in which case the mixture present in the vessel 13 is conducted directly to the contact reactor without passing any drying unit. Examples of a suitable arrangement according to this variant are given in SE-A-8501851.

Installations described in EP-A-0 200 695 and SE-A-8500612 are other examples which may advantageously be modified for the application of the present invention.

## Claims

1. Method for cleaning gases formed during the combustion of pulverized coal, wherein
the flue gases are cleaned of particulate pollutants, so-called fly ash, in a first step, and
of gaseous acidifying pollutants, in a subsequent step, by mixing the flue gases with a sorbent in the form of a dry powder or fine liquid droplets, whereupon
the resulting reaction products together with unreacted sorbent are separated as a dry powder from the flue gases,
**characterised** by
adding water to the fly ash separated in the first step and
milling the fly ash, in a ball mill provided with agitators, when in the wet state,
mixing the fly ash with burnt or slaked lime and/or silicon dioxide before or after the milling,
storing the mixed material in hot water at a temperature between 65°C and 95°C for a time between 1 and 24 hours in order to convert the CaO and SiO₂ present therein into Ca(OH)₂ and calcium silicates, and
using the thus treated material as sorbent in said subsequent cleaning step.

2. Method as claimed in Claim 1, **characterised** in that a portion of the sorbent used and separated in said subsequent step is recycled to be used again mixed with fresh sorbent.

## Patentansprüche

1. Verfahren zur Reinigung von Gasen, die bei der Verbrennung von Kohlenstaub gebildet worden sind, wobei die Verbrennungsgase von aus Teilchen bestehenden Schadstoffen, sog. Flugasche, in einer ersten Stufe gereinigt werden und von gasförmigen säuernden Schadstoffen in einer nachfolgenden Stufe durch Vermischen der Verbrennungsgase mit einem Sorptionsmittel in Form eines trockenen Pulvers oder feiner Flüssigkeitströpfchen gereinigt werden, wonach die hierbei entstehenden Reaktionsprodukte zusammen mit nicht reagiertem Sorptionsmittel als trockenes Pulver von den Verbrennungsgasen abgeschieden werden, **gekennzeichnet** durch die folgenden Schritte:
Zusetzen von Wasser zu der in der ersten Stufe abgeschiedenen Flugasche und
Mahlen der Flugasche im feuchten Zustand in einer mit Rührgliedern versehenen Kugelmühle,
Vermischen der Flugasche mit gebranntem oder gelöschtem Kalk und/oder Siliciumdioxid vor oder nach dem Mahlen,
Lagern des gemischten Materials in heissem Wasser bei einer Temperatur zwischen 65°C und 95°C während einer Zeit von 1-24 Stunden, um das darin vorhandene CaO und SiO₂ in Ca(OH)₂ und Calciumsilikate umzuwandeln, und
Verwenden des derart behandelten Materials als Sorptionsmittel in der genannten nachfolgenden Reinigungsstufe.

2. Verfahren nach Anspruch 1, dadurch **gekennzeichnet,** dass ein Teil des in der genannten nachfolgenden Stufe verwendeten und abgeschiedenen Sorptionsmittels zurückgeführt wird, um vermischt mit frischem Sorptionsmittel erneut verwendet zu werden.

## Revendications

1. Procédé d'épuration de gaz produits au cours de la combustion de charbon pulvérisé, dans lequel
l'on épure les gaz de combustion en en éliminant la matière polluante particulaire, dite cendre volante, dans une première étape, et en en éliminant la matière polluante acidifiante gazeuse dans une étape suivante, ceci se faisant par le mélange des gaz de combustion avec un sorbant sous forme d'une poudre sèche ou de gouttetettes liquides fines, après quoi
l'on sépare, des gaz de combustion, les produits réactionnels ainsi que le sorbant non réagi sous forme d'une poudre sèche,
**caractérisé** en ce que
l'on ajoute de l'eau à la cendre votante séparée dans la première étape,
l'on broie la cendre votante en état humide dans un broyeur à boules, pourvu d'agitateurs,
l'on mélange la cendre votante avec la chaux calcinée ou éteinte et/ou le dioxyde de silicium avant ou après l'opération de broyage,
l'on stocke la matière mélangée dans de l'eau chaude à une température comprise entre 65°C et 95°C pendant une période comprise entre 1 heure et 24 heures afin de transformer le CaO et le SiO₂ y présents en le Ca(OH)₂ et en les silicates de calcium, et
l'on utilise la matière ainsi traitée en tant que sorbant dans ladite étape d'épuration suivante.

2. Procédé selon la revendication 1, **caractérisé** en ce que l'on recycle une partie du sorbant utilisé et séparé dans ladite étape suivante, afin d'être réutilisée en mélange avec du sorbant frais.
